(19) Europäisches Patentamt
European Patent Office
Office européen des brevets

(11) EP 3 573 140 A1

(12) # EUROPEAN PATENT APPLICATION
published in accordance with Art. 153(4) EPC

(43) Date of publication:
**27.11.2019 Bulletin 2019/48**

(21) Application number: **18741567.4**

(22) Date of filing: **23.01.2018**

(51) Int Cl.:
***H01M 4/02*** *(2006.01)* ***H01G 11/38*** *(2013.01)*
***H01M 4/13*** *(2010.01)* ***H01M 4/62*** *(2006.01)*

(86) International application number:
**PCT/JP2018/001969**

(87) International publication number:
**WO 2018/135667 (26.07.2018 Gazette 2018/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **23.01.2017 JP 2017009636**

(71) Applicant: **HITACHI CHEMICAL COMPANY, LTD.**
**Chiyoda-ku**
**Tokyo**
**100-6606 (JP)**

(72) Inventors:
- **KUZUOKA, Hiroki**
  **Tokyo 100-6606 (JP)**
- **SUZUKI, Kenji**
  **Tokyo 100-6606 (JP)**
- **NAGAI, Shunsuke**
  **Tokyo 100-6606 (JP)**

(74) Representative: **Hoffmann Eitle**
**Patent- und Rechtsanwälte PartmbB**
**Arabellastraße 30**
**81925 München (DE)**

(54) **ELECTRODE FOR ENERGY DEVICES, AND ENERGY DEVICE**

(57) An energy device electrode contains a positive electrode mixture layer including a positive electrode active material, an electroconductive agent, and a binder resin, in which: a content ratio of the binder resin relative to a total mass of the positive electrode mixture layer is from 0.5% by mass to 5.5% by mass, and the binder resin comprises a resin including a structural unit derived from a nitrile group-containing monomer.

EP 3 573 140 A1

Printed by Jouve, 75001 PARIS (FR)

## Description

Technical Field

The present invention relates to an energy device electrode and an energy device.

Background Art

Lithium ion secondary batteries, which are nonaqueous electrolytic solution-based energy devices having a high energy density, are widely used as power sources for portable information terminals such as notebook computers, mobile phones, or PDAs (Personal Digital Assistants).

In lithium ion secondary batteries, carbon materials having multilayer structures capable of intercalating lithium ions thereinto (formation of lithium intercalation compounds) and releasing lithium ions therefrom are mainly used as negative electrode active materials. As positive electrode active materials, lithium-containing metal composite oxides are mainly used. Electrodes of lithium ion secondary batteries are prepared by kneading these active materials, binder resins, solvents (N-methyl-2-pyrrolidone, water, or the like) or the like to prepare slurries, coating the slurries with transfer rolls or the like on one side or both sides of metal foils which are current collectors, removing the solvent by drying to form mixture layers, and compression-molding with roll press machines or the like.

As the lithium-containing metal composite oxides, lithium cobalt oxides ($LiCoO_2$), lithium manganates ($LiMn_2O_4$), lithium nickel manganese cobalt oxides ($LiNi_{1/3}Mn_{1/3}Co_{1/3}O_2$), lithium iron phosphates ($LiFePO_4$), or the like are usually used, and they may be used singly or in combination of two or more kinds thereof depending on the purpose.

As binder resins for a positive electrode, polyvinylidene fluorides (hereinafter referred to as PVDF) are usually used from the viewpoints of electrochemical stability, resistance to dissolution into electrolytic solutions, and the like.

As the electrolytic solutions, solutions obtained by dissolving electrolytes including fluorine anions in carbonate-based solvents are widely used. As the electrolytes, $LiPF_6$ is usually used from the viewpoint of ion conductivity and electrochemical oxidation-reduction resistance in the state of obtaining the electrolytic solutions.

In recent years, lithium ion secondary batteries have been widely used as, for example, power sources and auxiliary power sources for electric vehicles, hybrid vehicles, and the like from the viewpoint of the high energy densities thereof. In a case in which lithium ion secondary batteries are installed in electric vehicles, hybrid vehicles and the like, the lithium ion secondary batteries may be exposed to high temperature environments.

$LiPF_6$ usually used as an electrolyte is poor in chemical stability and thermal stability, and may be hydrolyzed with a slight amount of water in an electrolytic solution, thereby generating hydrogen fluoride.

PVDF usually used as a binder resin for a positive electrode may be transformed by coming into contact with a basic substance under a high temperature environment, thereby generating hydrogen fluoride.

Generated hydrogen fluoride causes a metal to be eluted from a positive electrode active material, and the eluted metal is precipitated on the negative electrode side. As a result, the capacities of the positive electrode and the negative electrode may be decreased.

Therefore, a method in which a rare earth compound is fixed to a positive electrode active material, thereby reducing the decomposition of an electrolytic solution and suppressing a decrease in capacity, is proposed (see, for example, Patent Document 1). A method, in which an acid-neutralizing agent is allowed to exist in a lithium ion secondary battery, thereby suppressing elution of a metal from a positive electrode active material due to hydrogen fluoride, is proposed (see, for example, Patent Document 2).

Related Art Document

Patent Document

Patent Document 1: Japanese Patent Application Laid-Open (JP-A) No. 2013-179095
Patent Document 2: JP-ANo. 2010-205546

SUMMARY OF INVENTION

Technical Problem

A technique of fixing a rare earth compound to a part of a positive electrode active material is disclosed in Patent Document 1. However, in the technique disclosed in Patent Document 1, the rare earth compound which does

not contribute to a capacity is used in the positive electrode active material, and therefore, the energy density of a lithium ion secondary battery is decreased.

In a technique disclosed in Patent Document 2, an inorganic oxide such as alumina which does not contribute to a capacity is added into a lithium ion secondary battery, and therefore, the energy density of the lithium ion secondary battery may be decreased. When an acid-neutralizing agent is arranged in the axis core of an electrode group and in the outside of the electrode group, the effect of the acid-neutralizing agent may be local.

One embodiment in the present invention was made under such circumstances with an object of providing an energy device electrode and an energy device, in which a high capacity is obtained at an ordinary temperature, and a decrease in capacity in the case of being exposed to a high temperature is suppressed.

Solution to Problem

The present invention relates to the following.

<1> An energy device electrode, containing a positive electrode mixture layer including a positive electrode active material, an electroconductive agent, and a binder resin, in which:

a content ratio of the binder resin relative to a total mass of the positive electrode mixture layer is from 0.5% by mass to 5.5% by mass, and
the binder resin contains a resin including a structural unit derived from a nitrile group-containing monomer.

<2> The energy device electrode according to claim <1>, in which the resin including a structural unit derived from a nitrile group-containing monomer further contains a structural unit derived from a monomer represented by the following Formula (I):

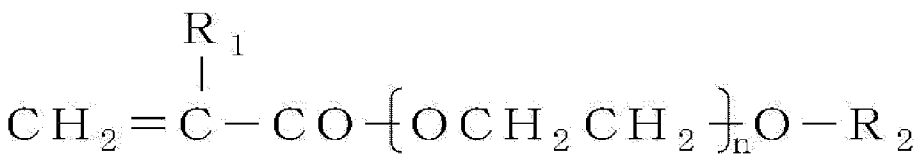

Formula (I)

in which, in Formula (I), $R_1$ represents a hydrogen atom or a methyl group, $R_2$ represents a hydrogen atom or a monovalent hydrocarbon group, and n represents an integer from 1 to 50.

<3> The energy device electrode according to claim <2>, in which a ratio of structural units derived from the monomer represented by the Formula (I), with respect to 1 mole of the structural unit derived from a nitrile group-containing monomer contained in the resin including a structural unit derived from a nitrile group-containing monomer, is from 0.001 moles to 0.2 moles.

<4> The energy device electrode according to any one of claims <1> to <3>, in which the resin including a structural unit derived from a nitrile group-containing monomer further contains a structural unit derived from a monomer represented by the following Formula (II):

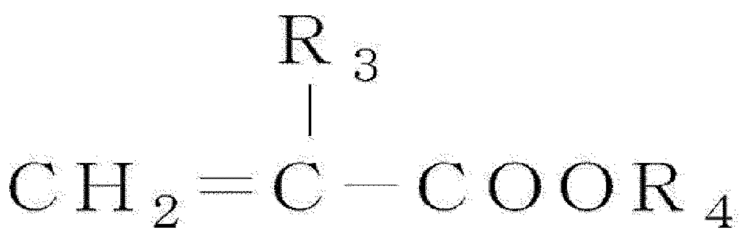

Formula (II)

in which, in Formula (II), $R_3$ represents a hydrogen atom or a methyl group, and $R_4$ represents an alkyl group having from 4 to 30 carbon atoms.

<5> The energy device electrode according to claim <4>, in which a ratio of the structural unit derived from the monomer represented by the Formula (II), with respect to 1 mole of the structural unit derived from a nitrile group-containing monomer contained in the resin including a structural unit derived from a nitrile group-containing monomer, is from 0.001 moles to 0.2 moles.

<6> The energy device electrode according to any one of claims <1> to <5>, in which the nitrile group-containing monomer contains acrylonitrile.

<7> An energy device, containing the energy device electrode according to any one of claims <1> to <6>.
<8> The energy device according to claim <7>, in which the energy device comprises a lithium ion secondary battery.

Advantageous Effects of Invention

According to one embodiment in the present invention, it is possible to provide an energy device electrode and an energy device, in which a high capacity is obtained at an ordinary temperature, and a decrease in capacity in the case of being exposed to a high temperature is suppressed.

DESCRIPTION OF EMBODIMENTS

Preferred embodiments of the present invention will be described below. Matters other than those specifically mentioned herein and necessary for implementing the present invention can be grasped as design variations of a person skilled in the art based on the prior art in the field of energy devices. The present invention can be implemented based on the contents disclosed herein and technical common knowledge in the field of energy devices.
In the disclosures, the term "process" includes a process in which the purpose of the process can be achieved although the process is unable to be clearly distinguished from other processes in addition to a process independent from other processes.
In the disclosures, each numerical range specified using "(from) ... to ..." represents a range including the numerical values noted before and after "to" as the minimum value and the maximum value, respectively.
In the disclosures, with respect to numerical ranges stated hierarchically herein, the upper limit or the lower limit of a numerical range of a hierarchical level may be replaced with the upper limit or the lower limit of a numerical range of another hierarchical level. Further, in the present specification, with respect to a numerical range, the upper limit or the lower limit of the numerical range may be replaced with a relevant value shown in any of Examples.
In the present disclosures, each component may include plural kinds of substances corresponding to the component. In a case in which plural kinds of substances exist corresponding to a component in the composition, the content means, unless otherwise specified, a total amount of the plural kinds of substances existing in the composition.
In the present disclosures, each component may include plural kinds of particles corresponding to the component. In a case in which plural kinds of particles exist corresponding to a component in the composition, the particle size means, unless otherwise specified, a value for a mixture of a plurality of kinds of particles present in the composition.
In the present disclosures, the term "layer" or "film" includes, when observing a region where a layer or film is present, a case in which the layer or the film is formed only on a part of the region in addition to a case in which the layer or the film is formed on the entirety of the region.
In the present disclosures, "(meth)acryl" means at least one of acryl or methacryl, "(meth)acrylate" means at least one of acrylate or methacrylate, and "(meth)ally" means at least one of allyl or methallyl.
An energy device electrode in the disclosures is preferably applied to a nonaqueous electrolytic solution-based energy device. The nonaqueous electrolytic solution-based energy device refers to an electricity storage or electricity generation device (apparatus) using an electrolytic solution other than water.
Technology in the disclosures can be widely applied to various energy devices having an electrode with an aspect in which an electrode active material is maintained in a current collector. In such a kind of an energy device, use of the energy device electrode in the disclosures in a positive electrode enables the suppression of a decrease in capacity which may occur when the temperature of the energy device increases. Hereinafter, the present invention will be described in detail by principally taking, as examples, an electrode including a positive electrode mixture layer containing a positive electrode active material, and a lithium ion secondary battery including the electrode. However, a target to which the present invention is applied is not intended to be limited to such an electrode or such an energy device.

< Energy Device Electrode >

An energy device electrode in the disclosures contains a positive electrode mixture layer including a positive electrode active material, an electroconductive agent and a binder resin, in which a content ratio of the binder resin relative to a total mass of the positive electrode mixture layer is from 0.5% by mass to 5.5% by mass, and the binder resin includes a resin including a structural unit derived from a nitrile group-containing monomer.
Hereinafter, a method of producing the energy device electrode in the disclosures, each element composing the energy device electrode in the disclosures and the like will be described.
The energy device electrode in the disclosures may include a positive electrode mixture layer containing a positive electrode active material, an electroconductive agent, and a binder resin. The positive electrode mixture layer may be formed on a positive electrode current collector. A method of forming a positive electrode mixture layer on a positive electrode current collector is not particularly limited, and, for example, such a method as described below can

be used as the method.

The energy device electrode can be formed by mixing a positive electrode active material, an electroconductive agent, a binder resin, and another component used if necessary, in a dry process, without using a solvent; molding the resultant in a sheet form; and attaching the sheeta to the positive electrode current collector by pressure (dry method). Alternatively, the energy device electrode can be formed by dissolving or dispersing a positive electrode active material, an electroconductive agent, a binder resin, and another component used if necessary in a solvent to make a positive electrode mixture material paste, which is applied to the positive electrode current collector, dried, and rolled (wet method).

In the case in which the wet method is applied, the application of the positive electrode mixture material paste to the positive electrode current collector can be performed using, for example, a comma coater or the like.

The application is suitably performed in such a manner that a ratio of the positive electrode capacity and the negative electrode capacity (negative electrode capacity/positive electrode capacity) of the opposed electrodes is 1 or more. A coating amount of the positive electrode mixture material paste per side is, for example, preferably, as the dry mass of the positive electrode mixture layer, from 5 $g/m^2$ to 500 $g/m^2$, more preferably from 50 $g/m^2$ to 300 $g/m^2$, and still more preferably from 100 $g/m^2$ to 200 $g/m^2$. The larger the coating amount, the easier it is to obtain a lithium ion secondary battery having a larger capacity, and the smaller the coating amount, the easier it is to obtain a lithium ion secondary battery with higher output.

Removal of the solvent is carried out, for example, preferably by drying at from 50°C to 150°C, and more preferably from 80°C to 120°C for preferably from 1 minute to 20 minutes, and more preferably from 3 minutes to 10 minutes.

Rolling is carried out, for example, using a roll press machine. A bulk density of the positive electrode mixture layer is preferably, for example, from 2 $g/cm^3$ to 5 $g/cm^3$, and more preferably from 2.5 $g/cm^3$ to 4 $g/cm^3$. Further, for example, the layer may be vacuum dried at from 100°C to 150°C for from 1 hour to 20 hours in order to remove residual solvent and adsorbed water in the positive electrode.

As the positive electrode current collector, those commonly used in the field of energy devices can be used. Specific examples thereof include a sheet and a foil containing stainless steel, aluminum, titanium, or the like. Among these, from the viewpoint of electrochemical viewpoint and cost, aluminum sheet or foil is preferable.

A thickness of the sheet or the foil is not particularly limited, and is, for example, preferably from 1 μm to 500 μm, more preferably from 2 μm to 100 μm, and still more preferably from 5 μm to 50 μm.

As the positive electrode active material, those commonly used in the field of energy devices can be used, and examples thereof include lithium-containing metal composite oxides, olivine type lithium salts, chalcogen compounds, and manganese dioxide.

The lithium-containing metal composite oxides mean metal composite oxides including lithium and transition metals. The transition metals included in the lithium-containing metal composite oxides may be used singly, or in combination of two or more kinds thereof, and examples thereof include Co, Ni, and Mn. Some of the transition metals included in the lithium-containing metal composite oxides may be substituted with elements different from the transition metals. Examples of the elements with which the transition metals are substituted include Na, Mg, Sc, Y, Mn, Fe, Co, Ni, Cu, Zn, Al, Cr, Pb, Sb, V, and B. As the elements, Mn, Al, Co, Ni, and Mg are preferred. The elements with which the transition metals are substituted may be used singly, or in combination of two or more kinds thereof.

Examples of the lithium-containing composite metal oxide include $Li_xCoO_2$, $Li_xNiO_2$, $Li_xMnO_2$, $Li_xCo_yNi_{1-y}O_2$, $Li_xCo_yM^1_{1-y}O_z$ (in $Li_xCo_yM^1_{1-y}O_z$, $M^1$ represents at least one element selected from the group consisting of Na, Mg, Sc, Y, Mn, Fe, Cu, Zn, Al, Cr, Pb, Sb, V, and B), $Li_xNi_{1-y}M^2_yO_z$ (in $Li_xNi_{1-y}M^2_yO_z$, $M^2$ represents at least one element selected from the group consisting of Na, Mg, Sc, Y, Mn, Fe, Co, Cu, Zn, Al, Cr, Pb, Sb, V, and B), $Li_xMn_2O_4$ and $Li_xMn_{2-y}M^3_yO_4$ (in $Li_xMn_{2-y}M^3_yO_4$, $M^3$ represents at least one element selected from the group consisting of Na, Mg, Sc, Y, Fe, Co, Cu, Zn, Al, Cr, Pb, Sb, V, and B), in each Formula, $0 < x \leq 1.2$, $0 \leq y \leq 0.9$, and $2.0 \leq z \leq 2.3$. In this case, an x value representing a molar ratio of lithium varies depending by charge and discharge.

Examples of the olivine type lithium salt include $LiFePO_4$.

Examples of the chalcogen compound include titanium disulfide and molybdenum disulfide.

Such positive electrode active materials may be used singly, or in combination of two or more kinds thereof.

From the viewpoint of safety, $Li_xMn_2O_4$ or a lithium-nickel-manganese-cobalt composite oxide is more preferably included as such a positive electrode active material.

An average particle size of the positive electrode active material is not particularly limited, and is preferably from 0.1 μm to 20 μm, more preferably from 0.5 μm to 18 μm, and still more preferably from 1 μm to 16 μm, from the viewpoint of the dispersibility of the positive electrode mixture material paste, the formability of the positive electrode mixture layer, the bulk density of the positive electrode mixture layer, battery performance, and the like.

ABET specific surface area of the positive electrode active material is not particularly limited, and is preferably from 0.1 $m^2/g$ to 4.0 $m^2/g$, more preferably from 0.2 $m^2/g$ to 2.5 $m^2/g$, and still more preferably from 0.3 $m^2/g$ to 1.5 $m^2/g$, from the viewpoint of the dispersibility of the positive electrode mixture material paste, the formability of the positive electrode mixture layer, the bulk density of the positive electrode mixture layer, battery performance, and the like.

Herein, the average particle size is defined as the 50% integration value (median diameter (D50)) from the small diameter side of a volume-based particle size distribution of a sample dispersed in purified water containing a surfactant measured by a laser diffraction-type particle size distribution measuring apparatus (for example, SALD-3000J manufactured by Shimadzu Corporation).

The BET specific surface area may be measured, for example, according to a nitrogen adsorption capacity according to JIS Z 8830:2013. Examples for a measuring apparatus include an AUTOSORB-1 (trade name) manufactured by Quantachrome Instruments. In measuring the BET specific surface area, moisture adsorbed on a surface of a sample or in the structure thereof may conceivably influence the gas adsorption capacity, and therefore a pretreatment for removing moisture by heating is preferably conducted firstly. In the pretreatment, a measurement cell loaded with 0.05 g of a measurement sample is evacuated by a vacuum pump to be 10 Pa or less, then heated at 110°C for a duration of 3 hours or longer, and cooled naturally to normal temperature (25°C) while maintaining the reduced pressure. After the pretreatment, the measurement temperature is lowered to 77K and a measurement is conducted in a measurement pressure range of less than 1 in terms of relative pressure which is namely an equilibrium pressure with respect to a saturated vapor pressure.

The surface interval $d_{002}$ of the 002 plane of the carbon material can be calculated using the Bragg's equation, from a diffraction peak corresponding to the carbon 002 plane appearing in the vicinity of the diffraction angle $2\theta$= 24° to 26° of a diffraction profile obtained by measuring a diffraction line with a goniometer by irradiating the sample with X rays (CuK$\alpha$ rays).

Examples of the electroconductive agent, which may be used for the positive electrode mixture layer, include carbon black, graphite, carbon fiber, and metal fiber. Examples of the carbon black include acetylene black, Ketjen black, channel black, furnace black, lamp black, and thermal black. Examples of graphite include natural graphite and artificial graphite. The electroconductive agents may be used singly, or in combination of two or more kinds thereof.

The binder resin used in the positive electrode mixture layer is not particularly limited as long as the binder resin is a resin including a structural unit derived from a nitrile group-containing monomer. Use of the resin including a structural unit derived from a nitrile group-containing monomer tends to result in suppression of generation of hydrogen fluoride from the binder resin, and to enable suppression of a decrease in capacity in storage at high temperature.

The nitrile group-containing monomer is not particularly limited. Examples of the nitrile group-containing monomer include: an acrylic nitrile group-containing monomer such as acrylonitrile or methacrylonitrile; a cyanic nitrile group-containing monomer such as $\alpha$-cyanoacrylate or dicyanovinylidene; and a fumaric nitrile group-containing monomer such as fumaronitrile.

Among these, from the viewpoints of ease of polymerization, cost performance, flexibility, plasticity, oxidation resistance, swelling resistance to an electrolytic solution or the like of electrodes, acrylonitrile is preferable. Polyacrylonitrile obtained by polymerizing acrylonitrile has high solubility in a solvent used in the positive electrode mixture material paste, facilitates uniform coating of the surface of the positive electrode active material, and therefore tends to be able to reduce contact between the positive electrode active material and hydrogen fluoride which can exist in a battery. As a result, the suppression of a decrease in capacity in storage at high temperature tends to be enabled.

A ratio of acrylonitrile in a nitrile group-containing monomer is, for example, preferably from 5% by mass to 100% by mass, more preferably from 50% by mass to 100% by mass, and still more preferably from 70% by mass to 100% by mass. These nitrile group-containing monomers may be used singly, or in combination of two or more kinds thereof.

In a case in which acrylonitrile and methacrylonitrile are used in combination as the nitrile group-containing monomer, a content of acrylonitrile is, for example, preferably from 5% by mass to 95% by mass, and more preferably 50% by mass to 95% by mass, based on a total amount of the nitrile group-containing monomer.

From the viewpoint of flexibility of electrodes, it is preferable that the resin including the structural unit derived from a nitrile group-containing monomer further include a structural unit derived from a monomer represented by Formula (I).

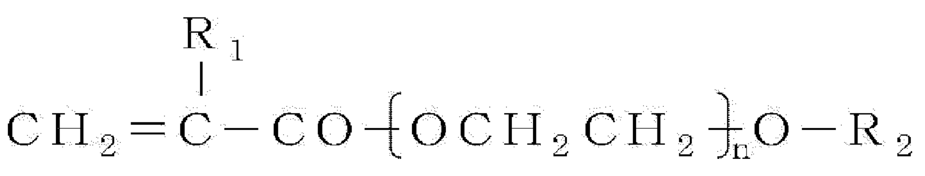

Formula (I)

Here, $R_1$ represents a hydrogen atom or a methyl group.

n represents an integer from 1 to 50, preferably an integer from 2 to 30, and more preferably an integer from 2 to 10.

$R_2$ represents a hydrogen atom or a monovalent hydrocarbon group, for example, preferably a monovalent hydrocarbon group having from 1 to 30 carbon atoms, more preferably a monovalent hydrocarbon group having from 1

to 25 carbon atoms, and still more preferably a monovalent hydrocarbon group having from 1 to 12 carbon atoms. In a case in which the monovalent hydrocarbon group has a substituent, the number of carbon atoms of the monovalent hydrocarbon group is defined as follows: the number of carbon atoms contained in the substituent is not included in the number of carbon atoms of the monovalent hydrocarbon group.

In a case in which $R_2$ is a hydrogen atom or a monovalent hydrocarbon group having from 1 to 30 carbon atoms, there is a tendency to obtain sufficient resistance to swelling to an electrolytic solution. Here, examples of the monovalent hydrocarbon group include an alkyl group and a phenyl group. $R_2$ is preferably an alkyl group having from 1 to 12 carbon atoms or a phenyl group. The alkyl group may be linear, branched, or cyclic.

A part of hydrogen atoms in the alkyl group and the phenyl group represented by $R_2$ may be substituted with a substituent. Examples of the substituent in a case in which $R_2$ is an alkyl group include a halogen atom such as a fluorine atom, a chlorine atom, a bromine atom, or an iodine atom; a substituent containing a nitrogen atom; a substituent containing a phosphorus atom; and an aromatic ring. Examples of the substituent in a case in which $R_2$ is a phenyl group include a halogen atom such as a fluorine atom, a chlorine atom, a bromine atom, or an iodine atom; a substituent containing a nitrogen atom; a substituent containing a phosphorus atom; an aromatic ring; and a linear, branched or cyclic alkyl group having from 3 to 10 carbon atoms.

As a monomer represented by Formula (I), a commercially available product or a synthesized product may be used. Specific examples of the monomer represented by Formula (I) available as a commercially available product include ethoxy diethylene glycol acrylate (manufactured by KYOEISHA CHEMICAL Co., LTD., trade name: LIGHT ACRYLATE EC-A), methoxytriethylene glycol acrylate (manufactured by KYOEISHA CHEMICAL Co., LTD., trade name: LIGHT ACRYLATE MTG-A and manufactured by Shin-Nakamura Chemical Co., Ltd., trade name: NK ESTER AM-30G), methoxy poly (n = 9) ethylene glycol acrylate (manufactured by KYOEISHA CHEMICAL Co., LTD., trade name: LIGHT ACRYLATE 130-A and manufactured by Shin-Nakamura Chemical Co., Ltd., trade name: NK ESTER AM-90G), methoxy poly (n = 13) ethylene glycol acrylate (manufactured by Shin-Nakamura Chemical Co., Ltd., trade name: NK ESTER AM-130G), methoxy poly (n = 23) ethylene glycol acrylate (manufactured by Shin-Nakamura Chemical Co., Ltd., trade name: NK ESTER AM-230G), octoxypoly (n = 18) ethylene glycol acrylate (manufactured by Shin-Nakamura Chemical Co., Ltd., trade name: NK ESTER A-OC-18E), phenoxy diethylene glycol acrylate (manufactured by KYOEISHA CHEMICAL Co., LTD., trade name: LIGHT ACRYLATE P-200A and manufactured by Shin-Nakamura Chemical Co., Ltd., trade name: NK ESTER AMP-20GY), phenoxypoly (n = 6) ethylene glycol acrylate (manufactured by Shin-Nakamura Chemical Co., Ltd., trade name: NK ESTER AMP-60G), nonylphenol EO adduct (n = 4) acrylate (manufactured by KYOEISHA CHEMICAL Co., LTD., trade name: LIGHT ACRYLATE NP-4EA), nonylphenol EO adduct (n=8) acrylate (manufactured by KYOEISHA CHEMICAL Co., LTD., trade name: LIGHT ACRYLATE NP-8EA), methoxy diethylene glycol methacrylate (manufactured by KYOEISHA CHEMICAL Co., LTD., trade name: LIGHT ESTER MC and manufactured by Shin-Nakamura Chemical Co., Ltd., trade name: NK ESTER M-20G), methoxytriethylene glycol methacrylate (manufactured by KYOEISHA CHEMICAL Co., LTD., trade name: LIGHT ESTER MTG), methoxy poly (n = 9) ethylene glycol methacrylate (manufactured by KYOEISHA CHEMICAL Co., LTD., trade name: LIGHT ESTER 130MA and manufactured by Shin-Nakamura Chemical Co., Ltd., trade name: NK ESTER M-90G), methoxy poly (n = 23) ethylene glycol methacrylate (manufactured by Shin-Nakamura Chemical Co., Ltd., trade name: NK ESTER M-230G), and methoxy poly (n = 30) ethylene glycol methacrylate (manufactured by KYOEISHA CHEMICAL Co., LTD., trade name: LIGHT ESTER 041MA).

Among these, methoxytriethylene glycol acrylate (in Formula (I), $R_1$ is H, $R_2$ is $CH_3$, and n is 3) is more preferable from the viewpoint of reactivity and the like when copolymerizing with the nitrile group-containing monomer such as acrylonitrile. These monomers represented by Formula (I) may be used singly or in combination of two or more kinds thereof.

From the viewpoint of flexibility of an electrode, the resin including a structural unit derived from a nitrile group-containing monomer preferably further includes a structural unit derived from a monomer represented by Formula (II).

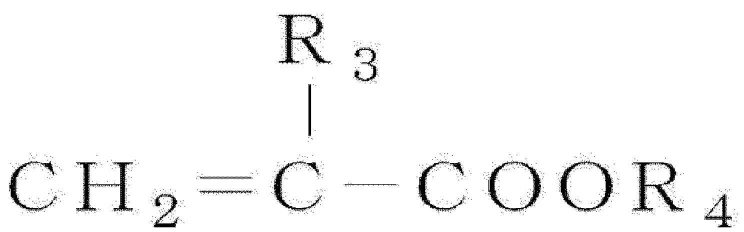

Formula (II)

Here, $R_3$ represents a hydrogen atom or a methyl group. $R_4$ represents an alkyl group having from 4 to 30 carbon atoms, preferably an alkyl group having from 5 to 25 carbon atoms, more preferably an alkyl group having from 6 to 20 carbon atoms, and still more preferably an alkyl group having from 8 to 16 carbon atoms. In a case in which the number of carbon atoms of the alkyl group represented by $R_4$ is 4 or more carbon atoms, sufficient plasticity tends to

be obtained. In a case in which the number of carbon atoms of the alkyl group represented by $R_4$ is 30 or less, sufficient swelling resistance against an electrolytic solution tends to be obtained. In a case in which the alkyl group represented by $R_4$ has a substituent, the number of carbon atoms of the alkyl group is defined as follows: the number of carbon atoms included in the substituent is not included in the number of carbon atoms of the alkyl group.

The alkyl group represented by $R_4$ may be linear, branched, or cyclic.

In the alkyl group represented by $R_4$, a part of hydrogen atoms may be substituted with a substituent. Examples of the substituent include a halogen atom such as a fluorine atom, a chlorine atom, a bromine atom, or an iodine atom; a substituent containing a nitrogen atom; a substituent containing a phosphorus atom; an aromatic ring; and a cycloalkyl group having from 3 to 10 carbon atoms. Examples of the alkyl group represented by $R_4$ include a linear, branched or cyclic alkyl group, and a halogenated alkyl group such as a fluoroalkyl group, a chloroalkyl group, a bromoalkyl group or an iodinated alkyl group.

As the monomer represented by Formula (II), a commercially available product or a synthesized product may be used. Specific examples of the monomer represented by Formula (II) available as a commercially available product include a (meth)acrylate ester including an alkyl group having from 4 to 30 carbon atoms, such as n-butyl (meth)acrylate, isobutyl (meth)acrylate, t-butyl (meth)acrylate, amyl (meth)acrylate, isoamyl (meth)acrylate, hexyl (meth)acrylate, heptyl (meth)acrylate, octyl (meth)acrylate, 2-ethylhexyl (meth)acrylate, nonyl (meth)acrylate, decyl (meth)acrylate, isodecyl (meth)acrylate, lauryl (meth)acrylate, tridecyl (meth)acrylate, hexadecyl (meth)acrylate, stearyl (meth)acrylate, isostearyl (meth)acrylate, cyclohexyl (meth)acrylate, or isobornyl (meth)acrylate.

In a case in which $R_4$ is a fluoro alkyl group, examples of the monomer include: an acrylate compound such as 1,1-bis(trifluoromethyl)-2,2,2-trifluoroethyl acrylate, 2,2,3,3,4,4,4-heptafluorobutyl acrylate, 2,2,3,4,4,4-hexafluorobutyl acrylate, nonafluoroisobutyl acrylate, 2,2,3,3,4,4,5,5-octafluoropentyl acrylate, 2,2,3,3,4,4,5,5,5-nonafluoropentyl acrylate, 2,2,3,3,4,4,5,5,6,6,6-undecafluorohexyl acrylate, 2,2,3,3,4,4,5,5,6,6,7,7,8,8,8-pentadecafluorooctyl acrylate, 3,3,4,4,5,5,6,6,7,7,8,8,9,9,10,10,10-heptadecafluorodecyl acrylate, or 2,2,3,3,4,4,5,5,6,6,7,7,8,8,9,9,10,10,10-nonadecafluorodecyl acrylate; and a methacrylate compound such as nonafluoro-t-butyl methacrylate, 2,2,3,3,4,4,4-heptafluorobutyl methacrylate, 2,2,3,3,4,4,5,5-octafluoropentyl methacrylate, 2,2,3,3,4,4,5,5,6,6,7,7-dodecafluoroheptyl methacrylate, heptadecafluorooctyl methacrylate, 2,2,3,3,4,4,5,5,6,6,7,7,8,8,8-pentadecafluorooctyl methacrylate, or 2,2,3,3,4,4,5,5,6,6,7,7,8,8,9,9-hexadecafluorononyl methacrylate.

These monomers represented by Formula (II) may be used singly, or in combination of two or more kinds thereof.

From the viewpoint of adhesiveness between a positive electrode current collector and a positive electrode mixture layer, the resin including a structural unit derived from a nitrile group-containing monomer may contain a carboxy group-containing structural unit derived from a carboxy group-containing monomer.

The carboxy group-containing monomer is not particularly limited, and examples thereof include an acrylic carboxy group-containing monomer such as an acrylic acid or a methacrylic acid, a crotonic carboxy group-containing monomer such as a crotonic acid, a maleic carboxy group-containing monomer such as a maleic acid and an anhydride thereof, an itaconic carboxy group-containing monomer such as an itaconic acid and an anhydride thereof, and a citraconic carboxy group-containing monomer such as a citraconic acid and an anhydride thereof.

Among them, an acrylic acid is preferable from the viewpoint of ease of polymerization, cost performance, flexibility, plasticity or the like of electrodes. The carboxy group-containing monomers may be used singly, or in combination of two or more kinds thereof. In a case in which an acrylic acid and methacrylic acid are used in combination as a carboxy group-containing monomer, a content of the acrylic acid is, for example, preferably from 5% by mass to 95% by mass, and more preferably from 50% by mass to 95% by mass, based on a total amount of the carboxy group-containing monomer.

In addition to the structural unit derived from a nitrile group-containing monomer, and, if necessary, the structural unit derived from the monomer represented by Formula (I), the structural unit derived from the monomer represented by Formula (II), and a carboxy group-containing structural unit derived from a carboxy group-containing monomer, a structural unit derived from another monomer different from such monomers can be further combined therewith if appropriate.

Another monomer is not particularly limited, and examples thereof include (meth)acrylate ester including an alkyl group having from 1 to 3 carbon atoms such as methyl (meth)acrylate, ethyl (meth)acrylate, or propyl (meth)acrylate; a vinyl halide such as vinyl chloride, vinyl bromide, or vinylidene chloride; maleic acid imide; phenyl maleimide; (meth)acrylamide; styrene; $\alpha$-methylstyrene, vinyl acetate; sodium (meth)allylsulfonate; sodium (meth)allyloxybenzenesulfonate; sodium styrenesulfonate; 2-acrylamido-2-methylpropanesulfonic acid; and a salt thereof. Another monomer may be used singly, or in combination of two or more kinds thereof.

In a case in which the resin including a structural unit derived from a nitrile group-containing monomer contains at least one selected from the group consisting of the structural unit derived from the monomer represented by Formula (I), the structural unit derived from the monomer represented by Formula (II), and the carboxy group-containing structural unit derived from a carboxy group-containing monomer, respective ratios of these structual units to 1 mole of the structural unit derived from a nitrile group-containing monomer are preferably the following molar ratios.

In a case in which the resin including the structural unit derived from a nitrile group-containing monomer includes the structural unit derived from the monomer represented by Formula (I), a ratio of the structural unit derived from a monomer represented by Formula (I) to 1 mole of the structural unit derived from a nitrile group-containing monomer is preferably from 0.001 moles to 0.2 moles, more preferably from 0.003 moles to 0.05 moles, and still more preferably from 0.005 moles to 0.02 moles.

In a case in which a ratio of a structural unit derived from the monomer represented by Formula (I) to 1 moles of the structural unit derived from a nitrile group-containing monomer is in the range of from 0.001 moles to 0.2 moles, adhesiveness to a positive electrode current collector, particularly a positive electrode current collector using an aluminum foil, and swelling resistance to an electrolytic solution are excellent, and flexibility and plasticity of an electrode tend to be favorable.

In a case in which the resin including a structural unit derived from a nitrile group-containing monomer includes the structural unit derived from the monomer represented by Formula (II), a ratio of the structural unit derived from the monomer represented by Formula (II) to 1 mole of the structural unit derived from a nitrile group-containing monomer is preferably from 0.001 moles to 0.2 moles, more preferably from 0.003 moles to 0.05 moles, and still more preferably from 0.005 moles to 0.02 moles.

In a case in which the ratio of the structural unit derived from the monomer represented by Formula (II) to 1 mole of the structural unit derived from a nitrile group-containing monomer is in the range of from 0.001 moles to 0.2 moles, adhesiveness to a positive electrode current collector, particularly a positive electrode current collector using an aluminum foil, and swelling resistance to an electrolytic solution are excellent, and flexibility and plasticity of an electrode tend to be favorable.

In a case in which the resin including a structural unit derived from a nitrile group-containing monomer includes the carboxy group-containing structural unit derived from a carboxy group-containing monomer, a ratio of the carboxy group-containing structural unit derived from a carboxy group-containing monomer to 1 mole of the structural unit derived from a nitrile group-containing monomer is preferably from 0.01 moles to 0.2 moles, more preferably from 0.02 moles to 0.1 moles, and still more preferably from 0.03 moles to 0.06 moles.

In a case in which the ratio of the carboxy group-containing structural unit derived from a carboxy group-containing monomer to 1 mole of the structural unit derived from a nitrile group-containing monomer is in the range of from 0.01 moles to 0.2 moles, adhesiveness to a positive electrode current collector, particularly a positive electrode current collector using an aluminum foil, and swelling resistance to an electrolytic solution are excellent, and flexibility and plasticity of an electrode tend to be favorable.

In another embodiment, the ratio of the carboxy group-containing structural unit derived from a carboxy group-containing monomer to 1 mole of the structural unit derived from a nitrile group-containing monomer may be 0.01 moles or less, 0.005 moles or less, or 0 moles.

In a case in which the resin including a structural unit derived from a nitrile group-containing monomer contains the structural unit derived from another monomer, a ratio of the structural unit derived from another monomer to 1 mole of the structural unit derived from a nitrile group-containing monomer is preferably from 0.005 moles to 0.1 moles, more preferably from 0.01 moles to 0.06 moles, and still more preferably from 0.03 moles to 0.05 moles.

A content of the structural unit derived from a nitrile group-containing monomer in the resin is preferably 80% by mole or more, and more preferably 90% by mole or more, based on a total amount of the structural units in the resin including a structural unit derived from a nitrile group-containing monomer.

The resin including a structural unit derived from a nitrile group-containing monomer may contain a structural unit derived from a crosslinking component for supplementing swell resistance to an electrolytic solution, a structural unit derived from a rubber component for supplementing the plasticity and flexibility of an electrode, and the like.

Examples of polymerization modes for synthesizing the resin including a structural unit derived from a nitrile group-containing monomer include precipitation polymerization, bulk polymerization, suspension polymerization, emulsion polymerization and solution polymerization, and there is no particular limitation. In-water precipitation polymerization is preferable from the viewpoint of ease of synthesis, ease of post-treatment such as collection or purification.

Hereinafter, the in-water precipitation polymerization will be described in detail.

A water-soluble polymerization initiator is preferable as a polymerization initiator for performing in-water precipitation polymerization from the viewpoint of polymerization initiation efficiency or the like.

Examples of the water-soluble polymerization initiator include a persulfate such as ammonium persulfate, potassium persulfate and sodium persulfate, a water-soluble peroxide such as hydrogen peroxide, a water-soluble azo compound such as 2,2'-azobis(2-methylpropionamidine hydrochloride), and an oxidation-reduction type (redox type) in which an oxidizing agent such as persulfate, a reducing agent such as sodium bisulfite, ammonium bisulfite, sodium thiosulfate and hydrosulfite, and a polymerization accelerator such as a sulfuric acid, iron sulfate, or copper sulfate are combined.

Among these, a persulfate, a water-soluble azo compound, or the like is preferable from the viewpoint of ease of resin synthesis or the like. Among persulfates, ammonium persulfate is particularly preferable.

In a case in which acrylonitrile is selected as the nitrile group-containing monomer, acrylic acid is selected as the carboxy group-containing monomer, and methoxytriethylene glycol acrylate is selected as the monomer represented by Formula (I) to conduct in-water precipitation polymerization, a water-soluble polymerization initiator effectively acts and polymerization starts smoothly since any of the monomers is water-soluble in the monomer state. As polymerization proceeds, polymer precipitates, as a result of which the reaction system becomes suspended, and eventually the resin including a structural unit derived from a nitrile group-containing monomer can be obtained in high yield with less unreacted material.

The polymerization initiator is preferably used in the range of, for example, from 0.001% by mole to 5% by mole, and more preferably in the range of from 0.01% by mole to 2% by mole, with respect to a total amount of the monomers used for synthesizing the resin including a structural unit derived from a nitrile group-containing monomer.

In carrying out in-water precipitation polymerization, a chain transfer agent may be used for the purpose of controlling a molecular weight or the like. Examples of the chain transfer agent include a mercaptan compound, carbon tetrachloride, and $\alpha$-methylstyrene dimer. Among them, $\alpha$-methylstyrene dimer is preferable from the viewpoint of less odor or the like.

When carrying out in-water precipitation polymerization, a solvent other than water may be added, if necessary, in order to control a particle size of a precipitated resin or the like.

Examples of solvents other than water include: an amide such as N-methyl-2-pyrrolidone, N,N-dimethylacetamide, or N,N-dimethylformamide; a urea such as N,N-dimethyl ethylene urea, N,N-dimethyl propylene urea, or tetramethyl urea; a lactone such as $\gamma$-butyrolactone or $\gamma$-caprolactone; a carbonate such as propylene carbonate; a ketone such as acetone, methyl ethyl ketone, methyl isobutyl ketone, or cyclohexanone; an ester such as methyl acetate, ethyl acetate, n-butyl acetate, butyl cellosolve acetate, butyl carbitol acetate, ethyl cellosolve acetate, or ethyl carbitol acetate; a glyme such as diglyme, triglyme, or tetraglyme; a hydrocarbon such as toluene, xylene, or cyclohexane; a sulfoxide such as dimethylsulfoxide; a sulfone such as sulfolane; and an alcohol such as methanol, isopropanol, or n-butanol. These solvents may be used singly, or in combination of two or more kind thereof.

In-water precipitation polymerization is carried out, for example, by introducing a nitrile group-containing monomer, and if necessary, a carboxy group-containing monomer, a monomer represented by Formula (I), a monomer represented by Formula (II) and other monomers into a solvent, setting the polymerization temperature to preferably from 0°C to 100°C, and more preferably from 30°C to 95°C, and maintaining the polymerization time preferably for from 1 hour to 50 hours, and more preferably for from 2 hours to 12 hours.

In a case in which the polymerization temperature is 0°C or higher, a polymerization reaction tends to be promoted. In a case in which the polymerization temperature is 100°C or less, even when water is used as a solvent, it becomes less likely for a state in which the water evaporates and then polymerization cannot be carried out to occur.

A weight average molecular weight of the resin including a structural unit derived from a nitrile group-containing monomer is preferably from 10,000 to 1,000,000, more preferably from 100,000 to 800,000, and still more preferably from 250,000 to 700,000.

In the disclosures, the weight average molecular weight refers to a value measured by the following method.

An object to be measured is dissolved in N-methyl-2-pyrrolidone, and an insoluble matter is removed through a filter made of PTFE (polytetrafluoroethylene) (for example, for pretreatment of HPLC (High Performance Liquid Chromatography), manufactured by KURABO INDUSTRIES LTD., CHROMATODISK, model number: 13N, pore size: 0.45 $\mu$m]. The weight average molecular weight is measured using GPC [for example, pump: L6200 Pump (manufactured by Hitachi, Ltd.), detector: Differential refractive index detector L3300 RI Monitor (manufactured by Hitachi, Ltd.), column: TSKgel-G5000HXL and TSKgel-G2000HXL (Total of 2) (both manufactured by Tosoh Corporation) are connected in series, column temperature: 30°C, eluent: N-methyl-2-pyrrolidone, flow rate: 1.0 mL/min, standard substance: polystyrene].

An acid value of the resin including a structural unit derived from a nitrile group-containing monomer is preferably from 0 mgKOH/g to 40 mgKOH/g, more preferably from 0 mgKOH/g to 10 mgKOH/g, and more preferably from 0 mgKOH/g to 5 mg KOH/g.

In the disclosuress, the acid value refers to a value measured by the following method.

First, after precisely weighing 1 g of an object to be measured, 30 g of acetone is added to the object to be measured to dissolve the object to be measured. Next, an appropriate amount of phenolphthalein as an indicator is added to a solution to be measured and titration is carried out using 0.1 N aqueous KOH solution. An acid value is then calculated from a result of the titration by the following Formula (A) (In Formula, Vf represents a titration amount (mL) of phenolphthalein, Wp represents a mass (g) of the solution to be measured, and I represents a proportion (% by mass) of a nonvolatile content of the solution to be measured).

$$\text{Acid value (mgKOH/g)} = 10 \times Vf \times 56.1/(Wp \times I) \qquad (A)$$

Approximately 1 mL of the solution to be measured is weighed out in an aluminum pan and dried on a hot plate heated to 160°C for 15 minutes, and the nonvolatile content of the solution to be measured is calculated from the residual material quantity.

In a case in which the nitrile group-containing monomer, and, if necessary, the carboxy group-containing monomer, the monomer represented by Formula (I), the monomer represented by Formula (II) and other monomers are polymerized, since the heat of polymerization of the nitrile group-containing monomer and optionally the carboxy group-containing monomer is particularly large, it is preferable to carry out polymerization while adding dropwise these monomers into a solvent.

The resin including a structural unit derived from a nitrile group-containing monomer is produced, for example, by polymerization as described above, and is usually used in the form of a varnish dissolved in a solvent. A solvent used for preparing a varnish-like resin including the structural unit derived from a nitrile group-containing monomer is not particularly limited, and for example, water and a solvent which can be added at the time of carrying out the above-described in-water precipitation polymerization can be used. Among them, amides, ureas, lactones or mixtures thereof are preferable in view of solubility of the resin including a structural unit derived from a nitrile group-containing monomer in the disclosures and the like, among which N-methyl-2-pyrrolidone, $\gamma$-butyrolactone or mixtures thereof is more preferable. These solvents may be used singly, or in combination of two or more kinds thereof.

An amount of the solvent to be used is not particularly limited as long as the amount is at least the minimum necessary amount at which the resin including a structural unit derived from a nitrile group-containing monomer can maintain a dissolved state at room temperature (25 °C). In preparation of an electrode of a positive electrode mixture material paste, since a viscosity of the paste is usually adjusted while adding a solvent, it is preferable to set an amount to an arbitrary amount that does not cause too much dilution.

In addition to the resin including a structural unit derived from a nitrile group-containing monomer, another resin commonly used in the field of energy devices can be used in combination as the binder resin. Examples of such other resins include polyvinyl acetate, polymethyl methacrylate, nitrocellulose, fluorine resins, and rubbers. Examples of the fluorine resins include polytetrafluoroethylene (PTFE), polyvinylidene fluoride (PVDF), tetrafluoroethylene-hexafluoropropylene copolymer (FEP), and vinylidene fluoride-hexafluoropropylene copolymer. Examples of the rubbers include styrene-butadiene rubber and acrylonitrile rubber.

A content ratio of the binder resin relative to a total mass of the positive electrode mixture layer is not particularly limited as long as the content ratio is from 0.5% by mass to 5.5% by mass. Setting of the content ratio of the binder resin relative to the total mass of the positive electrode mixture layer at 0.5% by mass or more tends to enable the binding property of the positive electrode mixture layer to the positive electrode current collector to be secured, while setting of the content ratio at 5.5% by mass or less tends to enable a capacity in usual use to be enhanced. From the viewpoint of the binding property of the positive electrode mixture layer and the capacity in usual use, the content ratio of the binder resin relative to the total mass of the positive electrode mixture layer is preferably from 1.0% by mass to 3.5% by mass, and more preferably from 1.5% by mass to 2.0% by mass.

A content ratio of the resin including a structural unit derived from a nitrile group-containing monomer relative to a total mass of the binder resin is not particularly limited. It is peferably from 20% by mass to 100% by mass, more preferably from 50% by mass to 100% by mass, and still more preferably from 80% by mass to 100% by mass.

< Energy Device >

The energy device in the disclosures includes the energy device electrode in the disclosures.

Examples of the energy device in the disclosures include a lithium ion secondary battery, an electric double layer capacitor, a solar cell, and a fuel cell.

A lithium ion secondary battery which is an example of the energy device in the disclosures can be obtained by combining the energy device electrode as a positive electrode in the disclosures, the negative electrode for an energy device, a separator, and an electrolytic solution.

Hereinafter, a case in which the energy device in the disclosures is applied to a lithium ion secondary battery will be described as an example.

The lithium ion secondary battery includes, for example, a positive electrode for an energy device, a negative electrode for an energy device, a separator interposed between the positive electrode for the energy device and the negative electrode for the energy device, and an electrolytic solution. The energy device electrode in the disclosures is used as the positive electrode for the energy device.

A negative electrode for an energy device (hereinafter sometimes simply referred to as a negative electrode) includes a negative electrode current collector and a negative electrode mixture layer provided on at least one surface of the negative electrode current collector. The negative electrode mixture layer contains a negative electrode active material, a binder resin, and, if necessary, an electroconductive agent.

As the negative electrode active material, those commonly used in the field of energy devices can be used.

Specific examples thereof include metallic lithium, a lithium alloy, a metal compound, a carbon material, a metal complex, and an organic polymer compound. The negative electrode active material may be used singly, or in combination of two or more kinds thereof.

Among them, a carbon material is preferable as the negative electrode active material. Examples of the carbon material include: graphite such as natural graphite (scaly graphite or the like), artificial graphite; carbon black such as acetylene black, Ketjen black, channel black, furnace black, lamp black, or thermal black; amorphous carbon; and carbon fiber.

An average particle size of the carbon material is preferably from 0.1 μm to 60 μm, more preferably from 0.3 μm to 45 μm, and still more preferably from 0.5 μm to 30 μm.

ABET specific surface area of the carbon material is preferably from 1 $m^2/g$ to 10 $m^2/g$.

Among carbon materials, in particular, from the viewpoint of further improving the discharge capacity of the lithium ion secondary battery, graphite having an interval ($d_{002}$) of carbon hexagonal planes in the X-ray wide angle diffraction method of from 3.35 Å to 3.40 Å and a crystallite (Lc) in the c-axis direction of 100 Å or more is preferable.

On the other hand, among carbon materials, in particular, from the viewpoint of further improving cycle characteristics and safety, amorphous carbon having an interval ($d_{002}$) of carbon hexagonal planes in the X-ray wide angle diffraction method of from 3.50 Å to 3.95 Å is preferable.

As the negative electrode current collector used for a negative electrode, those commonly used in the field of energy devices can be used. Specific examples thereof include a sheet and a foil containing stainless steel, nickel, copper, or the like. An average thickness of the sheet and the foil is not particularly limited, and is, for example, preferably from 1 μm to 500 μm, more preferably from 2 μm to 100 μm, and still more preferably from 5 μm to 50 μm.

In the negative electrode, from the viewpoint of reducing the resistance of an electrode, an electroconductive agent may be used. As the electroconductive agent, those commonly used in the field of energy devices can be used. Specific examples thereof include a carbon black, a graphite, a carbon fiber, and a metal fiber. Examples of the carbon black include acetylene black, Ketjen black, channel black, furnace black, lamp black and thermal black. Examples of graphite include natural graphite and artificial graphite. The electroconductive agents may be used singly, or in combination of two or more kinds thereof.

As a binder resin used for a negative electrode, those commonly used in the field of energy devices can be used. Specific examples thereof include polytetrafluoroethylene, polyvinylidene fluoride, styrene butadiene rubber, and acrylic rubber. Among these binder resins, styrene butadiene rubber and acrylic rubber are particularly preferable from the viewpoint of further improving the characteristics of the lithium ion secondary battery.

The negative electrode can be manufactured by using a known electrode manufacturing method without particular limitation. For example, a negative electrode mixture material paste containing a negative electrode active material, a binder resin, and, if necessary, an electroconductive agent and a solvent is applied on at least one surface of a negative electrode current collector, then the solvent is removed by drying, and if necessary, rolled to form a negative electrode mixture layer on the surface of the negative electrode current collector, whereby the negative electrode can be produced.

The solvent used for the negative electrode mixture material paste is not particularly limited and may be a solvent capable of uniformly dissolving or dispersing the binder resin. In a case in which styrene butadiene rubber is used as the binder resin, water widely used as a dispersion medium for the binder resin is preferable. The solvents may be used singly, or in combination of two or more kinds thereof.

A thickener may be added to the negative electrode mixture material paste for preparing the negative electrode mixture layer in order to improve dispersion stability and coatability of the negative electrode mixture material paste. Examples of the thickener include a carboxymethyl cellulose derivative such as carboxymethyl cellulose or carboxymethyl cellulose sodium, polyvinyl alcohol, polyvinyl pyrrolidone, water-soluble alginic acid derivatives, gelatin, carrageenan, glucomannan, pectin, curdlan, gellan gum, a polyacrylic acid derivative such as polyacrylic acid or an alkali metal salt thereof, ethylene-(meth)acrylic acid copolymer, and a polyvinyl alcohol copolymer such as polyvinyl alcohol, or ethylene-vinyl alcohol copolymer. Among these, a carboxymethyl cellulose derivative is preferable.

Application of the negative electrode mixture material paste can be carried out using a comma coater. The application of the slurry is suitably performed in such a manner that the ratio of the positive electrode capacity and the negative electrode capacity (negative electrode capacity/positive electrode capacity) of the opposed electrodes is 1 or more. A coating amount of the negative electrode mixture material paste is, for example, preferably, as the dry mass of the negative electrode mixture layer, from 5 $g/m^2$ to 300 $g/m^2$, more preferably from 25 $g/m^2$ to 200 $g/m^2$, and still more preferably from 50 $g/m^2$ to 150 $g/m^2$. The larger the coating amount, the easier it is to obtain a lithium ion secondary battery having a larger capacity, and the smaller the coating amount, the easier it is to obtain a lithium ion secondary battery with higher output.

Removal of the solvent is carried out, for example, preferably by drying at from 50°C to 150°C, and more preferably from 80°C to 120°C for preferably from 1 minute to 20 minutes, and more preferably from 3 minutes to 10 minutes.

Rolling is carried out, for example, using a roll press machine. A bulk density of the negative electrode mixture

layer is preferably, for example, from 1 $g/cm^3$ to 2 $g/cm^3$, more preferably from 1.2 $g/cm^3$ to 1.8 $g/cm^3$, and still more preferably from 1.4 $g/cm^3$ to 1.6 $g/cm^3$. Further, for example, the layer may be vacuum dried at from 100°C to 150°C for from 1 hour to 20 hours in order to remove residual solvent and adsorbed water in the negative electrode.

A separator is not particularly limited as long as the separator has ion permeability while electronically insulating between the positive electrode and the negative electrode and has resistance to oxidation on the positive electrode side and resistance to reduction on the negative electrode side. As a material (a quality of material) of the separator satisfying such characteristics, a resin, an inorganic material, or the like is used.

As the resin, an olefin polymer, a fluorine polymer, a cellulose polymer, polyimide, nylon, or the like is used. Specifically, it is preferable to select from among materials that are stable to an electrolytic solution and excellent in liquid retaining property, and it is preferable to use a porous sheet, nonwoven fabric, or the like made of polyolefin such as polyethylene or polypropylene as a raw material.

As the inorganic material, an oxide such as alumina or silicon dioxide, a nitride such as aluminum nitride or silicon nitride, a sulfate such as barium sulfate or calcium sulfate, or glass is used. For example, it is possible to use, as a separator, one obtained by adhering the above-described inorganic material in fiber shape or particle shape to a base material in thin film shape such as nonwoven fabric, woven fabric, or microporous film.

As the base material having a thin film shape, one having an average pore diameter of from 0.01 $\mu$m to 1 $\mu$m and an average thickness of from 5 $\mu$m to 50 $\mu$m is preferably used. A composite porous layer obtained by using the inorganic material of fiber shape or particle shape with a binder such as resin can be used as a separator. Further, the composite porous layer may be formed on the surface of the positive electrode or the negative electrode to form a separator. Alternatively, the composite porous layer may be formed on the surface of another separator to form a multi-layer separator. For example, a composite porous layer in which alumina particles having a 90% diameter (D90) of less than 1 $\mu$m is bound with a fluororesin as a binder may be formed on the surface of the positive electrode to form a separator.

(Electrolytic Solution)

The electrolytic solution is not particularly limited as long as the solutioin can fulfill a function, for example, as a lithium ion secondary battery which is an energy device. Examples of the electrolytic solution include a solution obtained by dissolving an electrolyte such as $LiClO_4$, $LiBF_4$, LiI, $LiPF_6$, $LiCF_3SO_3$, $LiCF_3CO_2$, $LiAsF_6$, $LiSbF_6$, $LiAlCl_4$, LiCl, LiBr, $LiB(C_2H_5)_4$, $LiCH_3SO_3$, $LiC_4F_9SO_3$, $Li(CF_3SO_2)_2N$, or $Li[(CO_2)_2]_2B$ in an organic solvent such as: a carbonate such as propylene carbonate, ethylene carbonate, butylene carbonate, dimethyl carbonate, diethyl carbonate, or methyl ethyl carbonate; a lactone such as $\gamma$-butyrolactone; an ether such as trimethoxymethane, 1,2-dimethoxyethane, diethyl ether, 2-ethoxyethane, tetrahydrofuran, or 2-methyltetrahydrofuran; a sulfoxide such as dimethylsulfoxide; an oxolane such as 1,3-dioxolane or 4-methyl-1,3-dioxolane; a nitrogen-containing compound such as acetonitrile, nitromethane, or N-methyl-2-pyrrolidone; an ester such as methyl formate, methyl acetate, butyl acetate, methyl propionate, ethyl propionate, or triester of phosphoric acid; a glyme such as diglyme, triglyme, tetraglyme; a ketone such as acetone, diethyl ketone, methyl ethyl ketone, or methyl isobutyl ketone; a sulfone such as sulfolane; an oxazolidinone such as 3-methyl-2-oxazolidinone; a sultone such as 1,3-propane sultone, 4-butane sultone, or naphthasultone. Among them, an electrolytic solution in which $LiPF_6$ is dissolved in carbonates is preferable.

The electrolytic solution is prepared, for example, by using an organic solvent and an electrolyte, respectively singly or in combination of two or more kinds thereof.

From the viewpoint of further improving the characteristics of the lithium ion secondary battery, it is preferable to contain vinylene carbonate (VC) in the electrolytic solution.

In a case in which vinylene carbonate (VC) is contained, a content thereof is preferably from 0.1% by mass to 2% by mass, and more preferably from 0.2% by mass to 1.5% by mass, based on a total amount of the electrolytic solution.

There are no particular restrictions on the method of producing a lithium ion secondary battery, and a known method can be used.

For example, firstly, two electrodes of a positive electrode and a negative electrode are wound via a separator made of a polyethylene microporous film. The obtained spiral wound group is inserted into a battery can, and a tab terminal welded to the current collector of the negative electrode in advance is welded to a bottom of the battery can. An electrolytic solution is injected into the obtained battery can and the tab terminal welded to the current collector of the positive electrode in advance is welded to a lid of the battery, the lid is disposed on the top of the battery can via an insulating gasket, and a portion where the lid and the battery can are in contact is caulked and sealed to obtain a lithium ion secondary battery.

EXAMPLES

Hereinafter, the present invention will be described in further detail with reference to experimental examples, but the present invention is not limited by these examples.

< Preparation of Resin A >

Into a 0.5 liter separable flask equipped with a stirrer, a thermometer, and a cooling tube, 397.2 g of purified water (manufactured by Wako Pure Chemical Industries, Ltd.) was added, the inside of the system was purged with nitrogen, and the temperature was raised to 72.0°C. After confirming that the water temperature in the system was 72.0°C, a solution of 347 mg of ammonium persulfate (manufactured by Wako Pure Chemical Industries, Ltd.) as a polymerization initiator dissolved in 2.5 g of purified water was added to the system, and then stirred at 250 revolutions per minute (rpm). Subsequently, a monomer (42.8 g (0.80 moles) of acrylonitrile as a nitrile group-containing monomer) was added dropwise to the system over 2 hours, and the mixture was allowed to react for 1 hour. Next, a solution in which 420 mg of ammonium persulfate (manufactured by Wako Pure Chemical Industries, Ltd.) as a polymerization initiator was dissolved in 7.8 g of purified water was added to the system, and the mixture was allowed to react for 1 hour. Subsequently, the temperature in the system was raised to 92.0°C, and the mixture was allowed to react for 1 hour. Next, a solution in which 210 mg of ammonium persulfate as a polymerization initiator (manufactured by Wako Pure Chemical Industries, Ltd.) was dissolved in 1.5 g of purified water was added to the system, and the mixture was allowed to react for 1 hour. During the above processes, the interior of the system was maintained in a nitrogen atmosphere and stirring was continued at 250 rpm. After cooling to room temperature (25°C), the reaction solution was subjected to suction filtration, and the precipitated resin was separated by filtration. The filtered resin was washed with 1,000 g of purified water (manufactured by Wako Pure Chemical Industries, Ltd.). The washed resin was dried in a vacuum dryer set at 60°C and 150 Pa for 24 hours to obtain a resin A. To a 0.5 liter separable flask equipped with a stirrer, a thermometer and a cooling tube, 423 g of N-methyl-2-pyrrolidone (NMP) was added, and after raising the temperature to 100 ± 5°C, 27 g of powder of the resin A was added, and stirred at 300 rpm for 5 hours to prepare an NMP solution of a resin A.

< Preparation of Resin B >

An NMP solution of a resin B was obtained in a similar manner the NMP solution of the resin A except that the monomer was changed to 41.4 g (0.78 moles) of an acrylonitrile (manufactured by Wako Pure Chemical Industries, Ltd.) as a nitrile group-containing monomer and 1.4 g (0.006 moles) of methoxytriethylene glycol acrylate (NK ESTER AM-30G, manufactured by Shin-Nakamura Chemical Co., Ltd.) as the monomer represented by Formula (I).

< Preparation of Resin C >

An NMP solution of a resin C was obtained in a similar manner to the NMP solution of the resin A except that the monomer was changed to 39.3 g (0.74 moles) of an acrylonitrile (manufactured by Wako Pure Chemical Industries, Ltd.) as a nitrile group-containing monomer, 1.4 g (0.006 moles) of methoxytriethylene glycol acrylate (NK ESTER AM-30Q manufactured by Shin-Nakamura Chemical Co., Ltd.) as the monomer represented by Formula (I), and 2.1 g (0.029 moles) of acrylic acid (manufactured by Wako Pure Chemical Industries, Ltd.) as the carboxy group-containing monomer.

< Preparation of Resin D >

An NMP solution of a resin D was obtained in a similar manner to the NMP solution of the resin A except that the monomer was changed to 40.2 g (0.76 moles) of an acrylonitrile (manufactured by Wako Pure Chemical Industries, Ltd.) as a nitrile group-containing monomer, and 2.6 g (0.006 moles) of methoxy poly (n=9) ethylene glycol acrylate (NK ESTER AM-90Q manufactured by Shin-Nakamura Chemical Co., Ltd.) as the monomer represented by Formula (I).

< Preparation of Resin E >

An NMP solution of a resin E was obtained in a similar manner to the NMP solution of the resin A except that the monomer was changed to 41.4 g (0.78 moles) of an acrylonitrile (manufactured by Wako Pure Chemical Industries, Ltd.) as a nitrile group-containing monomer, and 1.4 g (0.003 moles) of methoxy poly (n=9) ethylene glycol acrylate (NK ESTER AM-90Q manufactured by Shin-Nakamura Chemical Co., Ltd.) as the monomer represented by Formula (I).

< Preparation of Resin F >

An NMP solution of a resin F was obtained in a similar manner to the NMP solution of the resin A except that the monomer was changed to 37.7 g (0.71 moles) of an acrylonitrile (manufactured by Wako Pure Chemical Industries, Ltd.) as a nitrile group-containing monomer, and 5.1 g (0.011 moles) of methoxy poly (n=9) ethylene glycol acrylate (NK ESTER AM-90Q manufactured by Shin-Nakamura Chemical Co., Ltd.) as the monomer represented by Formula (I).

(Example 1)

[Production of Positive Electrode]

A positive electrode was produced as follows. Acetylene black (trade name: HS-100, average particle size of 48 nm (catalog value of Denka Company Limited), manufactured by Denka Company Limited) as an electroconductive agent and the resin A as a binder resin were added in turn to lithium manganate ($LiMn_2O_4$, having a BET specific surface area of 0.3 $m^2/g$ and an average particle size (d50) of 13.0 μm, hereinafter referred to as "LMO") as a positive electrode active material, and the resultant was mixed, thereby obtaining a positive electrode mixture material. A mass ratio was set at active material: electroconductive agent: binder resin = 94.0:4.5:1.5. Further, N-methyl-2-pyrrolidone as a solvent was added to the positive electrode mixture material, and the resultant was kneaded, thereby forming a positive electrode mixture material paste. The positive electrode mixture material paste was substantially uniformly and homogeneously applied to one surface of an aluminum foil having an average thickness of 20 μm, as a positive electrode current collector. Then, the resultant was subjected to drying treatment, and consolidated to have a predetermined density by press, thereby obtaining a positive electrode. A bulk density of a positive electrode mixture layer was set at 2.9 $g/cm^3$, and the dry mass of the positive electrode mixture layer was set at 150 $g/m^2$. Then, the positive electrode was cut into 4 cm × 3.5 cm.

[Production of Negative Electrode]

A negative electrode was produced as follows. A surface of metallic lithium was polished until a gloss had developed. The metallic lithium was substantially uniformly and homogeneously attached to a copper mesh as a negative electrode current collector by pressure, to make a negative electrode. Then, the negative electrode was cut into 4.1 cm × 3.6 cm.

[Production of Battery]

The obtained positive electrode and negative electrode were opposed to each other via a separator, and tab lines for power collection were connected to the positive electrode and the negative electrode, respectively, to obtain an electrode group. The obtained electrode group was put in a laminate, 1000 μL of electrolytic solution was injected into the laminate, and the laminate was then vacuum-sealed to obtain a laminate type battery. As the electrolytic solution, an electrolytic solution obtained by adding, to a 1.0 M propylene carbonate/diethyl carbonate = 3/7 mixed solution (volume ratio) including $LiPF_6$, 1.0% by mass of vinylene carbonate with respect to a total amount of the mixed solution, was used. A polyethylene porous sheet was used as the separator.

(Example 2)

A laminate type battery was produced in a similar manner to Example 1 except that the binder resin was changed to the resin B.

(Example 3)

A laminate type battery was produced in a similar manner to Example 1 except that the binder resin was changed to the resin C.

(Example 4)

A laminate type battery was produced in a similar manner to Example 1 except that the binder resin was changed to the resin D.

(Example 5)

A laminate type battery was produced in a similar manner to Example 1 except that the positive electrode active material was changed to NMC that is lithium nickel manganese cobalt oxides ($LiNi_{1/3}Mn_{1/3}Co_{1/3}O_2$) having a BET specific surface area of 0.4$m^2/g$, an average particle size (d50) of 6.5 μm.

(Example 6)

A laminate type battery was produced in a similar manner to Example 2 except that the positive electrode active material was changed to NMC.

(Example 7)

A laminate type battery was produced in a similar manner to Example 3 except that the positive electrode active material was changed to NMC.

(Example 8)

A laminate type battery was produced in a similar manner to Example 4 except that the positive electrode active material was changed to NMC.

(Comparative Example 1)

A laminate type battery was produced in a similar manner to Example 1 except that the binder resin was changed to polyvinylidene difluoride (PVDF).

(Comparative Example 2)

A laminate type battery was produced in a similar manner to Example 3 except that a content ratio of the positive electrode mixture was changed so that active material : electroconductive agent: binder is 95.3 : 4.5 : 0.2.

(Comparative Example 3)

A laminate type battery was produced in a similar manner to Example 3 except that a content ratio of the positive electrode mixture was changed so that active material : electroconductive agent: binder is 89.5 : 4.5 : 6.0.

(Comparative Example 4)

A laminate type battery was produced in a similar manner to Example 5 except that the binder resin was changed to polyvinylidene difluoride (PVDF).

(Comparative Example 5)

A laminate type battery was produced in a similar manner to Example 7 except that a content ratio of the positive electrode mixture was changed so that active material : electroconductive agent: binder is 95.3 : 4.5 : 0.2.

(Comparative Example 6)

A laminate type battery was produced in a similar manner to Example 7 except that the content ratio of the positive electrode mixture was changed so that active material : electroconductive agent: binder is 89.5 : 4.5 : 6.0.

(Example 9)

A laminate type battery was produced in a similar manner to Example 1 except that the binder resin was changed to the resin E.

(Example 10)

A laminate type battery was produced in a similar manner to Example 1 except that the binder resin was changed to the resin F.

(Example 11)

A laminate type battery was produced in a similar manner to Example 9 except that the positive electrode active

material was changed to NMC.

(Example 12)

A laminate type battery was produced in a similar manner to Example 10 except that the positive electrode active material was changed to NMC.

<Evaluation of Battery>

Each of the laminate type batteries produced in Example 1 to Example 12 and Comparative Example 1 to Comparative Example 6 was put in a constant-temperature bath set at 25°C, and charged and discharged under the following conditions at 25°C using a charge/discharge apparatus (trade name: TOSCAT-3200, manufactured by TOYO SYSTEM Co., LTD.). Constant-current constant-voltage (CCCV) charging (charge cutoff condition: 0.01 C) was performed at 4.2 V and 0.1 C, and constant-current (CC) discharging was then performed at 0.1 C until 3.0 V was achieved. The charging and discharging were repeated three times, and a capacity obtained by the third discharging was regarded as a capacity before storage. It is to be noted that 0.1 C is a current value at which it takes ten hours to finish the charging (discharging) of the laminate type battery.

Then, the laminate type battery was put in a constant-temperature bath set at 25°C, maintained for five hours, and then CCCV charged (cutoff condition: 0.01 C) at 4.2 V and 0.5 C. The charged laminate type battery was put in a constant-temperature bath set at 105°C, maintained for 48 hours, then put in a constant-temperature bath set at 25°C, and CC discharged at 0.5 C.

Then, the laminate type battery was put in a constant-temperature bath set at 25°C, CCCV charged (cutoff condition: 0.01 C) at 4.2 V and 0.1 C, and then CC discharged at 0.1 C and 3.0 V. A capacity obtained by the discharging was regarded as a capacity after storage.

A value calculated from the following equation was regarded as a capacity recovery rate.

Capacity recovery rate (%) = (Capacity after storage) / (Capacity before storage) $\times$ 100

The obtained results are shown in Table 1 to Table 5. In Tables, the symbol "-" means that no corresponding component was contained.

Table 1

| Item | | Example 1 | Example 2 | Example 3 | Example 4 |
|---|---|---|---|---|---|
| Content ratio of positive electrode mixture (% by mass) | LMO | 94.0 | 94.0 | 94.0 | 94.0 |
| | Electroconductive agent | 4.5 | 4.5 | 4.5 | 4.5 |
| | Resin A | 1.5 | - | - | - |
| | Resin B | - | 1.5 | - | - |
| | Resin C | - | - | 1.5 | - |
| | Resin D | - | - | - | 1.5 |
| | PVDF | - | - | - | - |
| Capacity before storage (mAh) | | 18.7 | 18.7 | 18.7 | 18.7 |
| Capacity after storage (mAh) | | 16.7 | 16.7 | 16.7 | 16.7 |
| Capacity recovery rate (%) | | 89.3 | 89.3 | 89.3 | 89.3 |

Table 2

| Item | | Comparative Example 1 | Comparative Example 2 | Comparative Example 3 |
|---|---|---|---|---|
| Content ratio of positive electrode mixture (% by mass) | LMO | 94.0 | 95.3 | 89.5 |
| | Electroconductive agent | 4.5 | 4.5 | 4.5 |
| | Resin A | - | - | - |
| | Resin B | - | - | - |
| | Resin C | - | 0.2 | 6.0 |
| | PVDF | 1.5 | - | - |
| Capacity before storage (mAh) | | 18.7 | 18.9 | 17.1 |
| Capacity after storage (mAh) | | 15.1 | 14.9 | 15.4 |
| Capacity recovery rate (%) | | 80.7 | 78.8 | 90.1 |

Table 3

| Item | | Example 5 | Example 6 | Example 7 | Example 8 |
|---|---|---|---|---|---|
| Content ratio of positive electrode mixture (% by mass) | NMC | 94.0 | 94.0 | 94.0 | 94.0 |
| | Electroconductive agent | 4.5 | 4.5 | 4.5 | 4.5 |
| | Resin A | 1.5 | - | - | - |
| | Resin B | - | 1.5 | - | - |
| | Resin C | - | - | 1.5 | - |
| | Resin D | - | - | - | 1.5 |
| | PVDF | - | - | - | - |
| Capacity before storage (mAh) | | 28.4 | 28.4 | 28.3 | 28.3 |
| Capacity after storage (mAh) | | 28.0 | 28.0 | 28.0 | 28.0 |
| Capacity recovery rate (%) | | 98.6 | 98.6 | 98.9 | 98.9 |

Table 4

| Item | | Comparative Example 4 | Comparative Example 5 | Comparative Example 6 |
|---|---|---|---|---|
| Content ratio of positive electrode mixture (% by mass) | NMC | 94.0 | 95.3 | 89.5 |
| | Electroconductive agent | 4.5 | 4.5 | 4.5 |
| | Resin A | - | - | - |
| | Resin B | - | - | - |
| | Resin C | - | 0.2 | 6.0 |
| | PVDF | 1.5 | - | - |
| Capacity before storage (mAh) | | 28.4 | 28.7 | 26.1 |
| Capacity after storage (mAh) | | 26.7 | 25.2 | 25.8 |
| Capacity recovery rate (%) | | 94.0 | 87.8 | 98.9 |

Table 5

| Item | | Example 9 | Example 10 | Example 11 | Example 12 |
|---|---|---|---|---|---|
| Content ratio of positive electrode mixture (% by mass) | LMO | 94.0 | 94.0 | - | - |
| | NMC | - | - | 94.0 | 94.0 |
| | Electroconductive agent | 4.5 | 4.5 | 4.5 | 4.5 |
| | Resin E | 1.5 | - | 1.5 | - |
| | Resin F | - | 1.5 | - | 1.5 |
| Capacity before storage (mAh) | | 18.7 | 18.7 | 28.4 | 28.4 |
| Capacity after storage (mAh) | | 16.7 | 16.7 | 28.0 | 28.0 |
| Capacity recovery rate (%) | | 89.3 | 89.3 | 98.6 | 98.6 |

Each of Example 1 to Example 12, in which the resin including a structural unit derived from a nitrile group-containing monomer was used as the binder resin, is superior in capacity after storage and capacity recovery rate to each of Comparative Example 1 and Comparative Example 4, in which PVDF was used as the binder resin. The results are presumed to be caused by no generation of hydrogen fluoride from such a binder resin and by a reduction in contact between the positive electrode active material and hydrogen fluoride generated from a member other than the binder resin.

Each of Comparative Example 2 and Comparative Example 5, in which the content ratio of the binder resin with respect to the total amount of the positive electrode mixture material was less than those in Example 1 to Example 12 although the resin including a structural unit derived from a nitrile group-containing monomer was used as the binder resin, has a less capacity after storage and a less capacity recovery rate. The results are presumed to be caused by breakage of the structure of the positive electrode mixture layer in storage at high temperature due to a small amount of binder resin and the insufficient binding properties of the electrodes.

Each of Comparative Example 3 and Comparative Example 6, in which the content ratio of the binder resin with respect to the total amount of the positive electrode mixture material was more than those in Example 1 to Example 12 although the resin including a structural unit derived from a nitrile group-containing monomer was used as the binder resin, has a less capacity before storage and a less capacity after storage although having an excellent capacity recovery rate. The results are presumed to be caused by no contribution of the resin including a structural unit derived from a nitrile group-containing monomer to a capacity and by the resin facilitating coating of the positive electrode active material, thereby increasing the resistance of the positive electrode mixture material.

The above results suggested that a high capacity is obtained at ordinary temperature (25°C), and a decrease in capacity, which can occur in the case of being exposed to high temperature, is suppressed, when an energy device electrode and an energy device include a positive electrode mixture layer containing a positive electrode active material, an electroconductive agent, and a binder resin, and in which a content ratio of the binder resin in a total mass of the positive electrode mixture layer is from 0.5% by mass to 5.5% by mass, and in which the binder resin is a resin including a structural unit derived from a nitrile group-containing monomer.

The entire contents of the disclosures by Japanese Patent Application No. 2017-009636 filed on January 23, 2017 are incorporated herein by reference.

All the literature, patent application, and technical standards cited herein are also herein incorporated to the same extent as provided for specifically and severally with respect to an individual literature, patent application, and technical standard to the effect that the same should be so incorporated by reference.

## Claims

1. An energy device electrode, comprising a positive electrode mixture layer including a positive electrode active material, an electroconductive agent, and a binder resin, wherein:

    a content ratio of the binder resin relative to a total mass of the positive electrode mixture layer is from 0.5% by mass to 5.5% by mass, and
    the binder resin comprises a resin including a structural unit derived from a nitrile group-containing monomer.

2. The energy device electrode according to claim 1, wherein the resin including a structural unit derived from a nitrile

group-containing monomer further comprises a structural unit derived from a monomer represented by the following Formula (I):

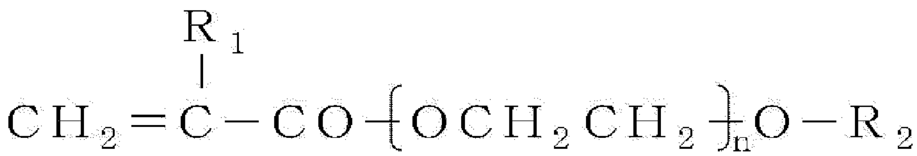

Formula (I)

wherein, in Formula (I), $R_1$ represents a hydrogen atom or a methyl group, $R_2$ represents a hydrogen atom or a monovalent hydrocarbon group, and n represents an integer from 1 to 50.

3. The energy device electrode according to claim 2, wherein a ratio of structural units derived from the monomer represented by the Formula (I), with respect to 1 mole of the structural unit derived from a nitrile group-containing monomer contained in the resin including a structural unit derived from a nitrile group-containing monomer, is from 0.001 moles to 0.2 moles.

4. The energy device electrode according to any one of claims 1 to 3, wherein the resin including a structural unit derived from a nitrile group-containing monomer further comprises a structural unit derived from a monomer represented by the following Formula (II):

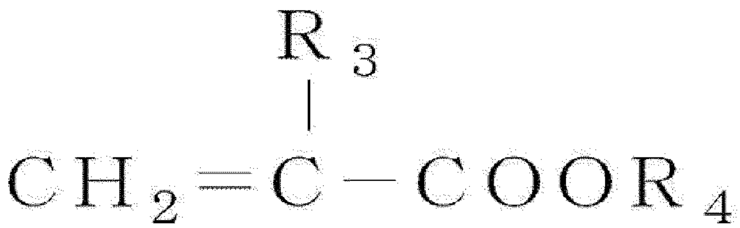

Formula (II)

wherein, in Formula (II), $R_3$ represents a hydrogen atom or a methyl group, and $R_4$ represents an alkyl group having from 4 to 30 carbon atoms.

5. The energy device electrode according to claim 4, wherein a ratio of the structural unit derived from the monomer represented by the Formula (II), with respect to 1 mole of the structural unit derived from a nitrile group-containing monomer contained in the resin including a structural unit derived from a nitrile group-containing monomer, is from 0.001 moles to 0.2 moles.

6. The energy device electrode according to any one of claims 1 to 5, wherein the nitrile group-containing monomer comprises acrylonitrile.

7. An energy device, comprising the energy device electrode according to any one of claims 1 to 6.

8. The energy device according to claim 7, wherein the energy device comprises a lithium ion secondary battery.

**INTERNATIONAL SEARCH REPORT**

International application No. PCT/JP2018/001969

A. CLASSIFICATION OF SUBJECT MATTER
Int.Cl. H01M4/02(2006.01)i, H01G11/38(2013.01)i, H01M4/13(2010.01)i, H01M4/62(2006.01)i

According to International Patent Classification (IPC) or to both national classification and IPC

B. FIELDS SEARCHED

Minimum documentation searched (classification system followed by classification symbols)
Int.Cl. H01M4/02, H01G11/38, H01M4/13, H01M4/62

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2016/147857 A1 (HITACHI CHEMICAL COMPANY, LTD.) 22 September 2016, paragraphs [0078], [0079], [0081] & TW 1641562 A | 1-8 |
| X | WO 2016/068142 A1 (HITACHI CHEMICAL COMPANY, LTD.) 06 May 2016, claims 1, 12, paragraphs [0049], [0052] & US 2017/0317379 A1, claims 1, 12, paragraphs [0093], [0097] & CN 107078276 A | 1-8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14.02.2018 | 27.02.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2018/001969

C (Continuation). DOCUMENTS CONSIDERED TO BE RELEVANT

| Category* | Citation of document, with indication, where appropriate, of the relevant passages | Relevant to claim No. |
|---|---|---|
| X | JP 2014-175106 A (NIPPON CARBIDE KOGYO KK) 22 September 2014, claim 1, paragraph [0051] & CN 104037419 A | 1, 4, 6-8 |
| X | JP 2012-59490 A (PANASONIC CORPORATION) 22 March 2012, paragraph [0046] (Family: none) | 1, 4, 6-8 |
| X | JP 2010-61940 A (PANASONIC CORPORATION) 18 March 2010, paragraph [0290] (Family: none) | 1, 4, 6-8 |
| X | JP 2009-170428 A (UBE INDUSTRIES) 30 July 2009, paragraph [0051] (Family: none) | 1, 4, 6-8 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013179095 A
- JP 2010205546 A
- JP 2017009636 A